# EUROPEAN PATENT SPECIFICATION

(11) **EP 3 470 899 B1**
(45) Date of publication and mention of the grant of the patent: **27.05.2020**
(21) Application number: 16924884.6
(22) Date of filing: 26.12.2016
(51) Int. Cl.: G02B 6/42, G02B 6/36

(54) **OPTICAL MODULE PACKAGING STRUCTURE AND OPTICAL MODULE**
GEHÄUSESTRUKTUR FÜR OPTISCHES MODUL UND OPTISCHES MODUL
STRUCTURE DE CONDITIONNEMENT DE MODULE OPTIQUE ET MODULE OPTIQUE

(30) Priority: 20.12.2016 CN 201611182299
(43) Date of publication of application: 17.04.2019
(73) Proprietor: Hisense&Jonhon Optical-Electrical Technologies Co., Ltd., Qingdao, Shandong 266101 (CN)
(72) Inventor: ZHONG, Zhaoliang, Qingdao, Shandong 266101 (CN); JIANG, Yufei, Qingdao, Shandong 266101 (CN); WEI, Lun, Qingdao, Shandong 266101 (CN); PAN, Kai, Qingdao, Shandong 266101 (CN); WANG, Yongle, Qingdao, Shandong 266101 (CN); YANG, Qiliang, Qingdao, Shandong 266101 (CN); ZHANG, Shuai, Qingdao, Shandong 266101 (CN)
(74) Representative: Fabry, Bernd
(86) International application number: PCT/CN2016/112017
(87) International publication number: WO 2018/112988

(56) References cited:
- CN-A- 1 908 715
- CN-A- 102 207 592
- CN-U- 204 807 766
- CN-U- 205 027 941
- CN-U- 205 539 594
- JP-A- H11 177 278
- TW-U- 514 344
- US-A1- 2015 362 686

## Description

### Technical Field

The invention belongs to the technical field of photoelectric conversion devices, and in particular relates to a packaging structure for optical module.

### Background Technique

Rapid promotion and wide application of optical communication technology stimulate the demand for photoelectric conversion module. It sets clear marketing objectives for products of advantages such as miniaturization, high speed, high density and high power; while the problem of heat dissipation following the package evolves into a bottleneck that affects the performance and service life of high-power photoelectric conversion modules.

The heat generated by the high-power photoelectric conversion module mainly comes from its internal chips, such as optical transceiver chip, driver chip and the like. The design of such small-sized high-power photoelectric conversion modules in the market begins to focus on solving the heat dissipation problem but the effect achieved is far from ideal. The reason for the failure is that the chip carrier and the optical module housing are separated, naturally there would be a heat transfer channel formed between the chip and the housing where air gaps or thermal conductive adhesives exist and this can cause a substantial increase in the thermal resistance. Under these circumstances, the long-term stability of heat transfer is negatively affected and the consistency of product quality cannot be ensured. Furthermore, the sealing performance of the light path circuit and the cooling of the chips cannot be satisfied at the same time.

U.S Patent Application, US2015/0362686A1, discloses a pluggable connector in which a heat-dissipating chip and a PCB are mounted on a heat-conducting plate and then placed on housing via the heat-conducting plate to transfer heat through the housing. According to these arrangements, the chip carrier and the heat dissipation housing are independent and separated from each other, multiple contact interfaces with air gaps or thermal conductive adhesives between each other are formed in the heat conduction paths, which hinder the heat from transferring to the housing efficiently. As a result, the cooling effect is not ideal, and the long-term stability of heat dissipation is negatively affected and the consistency of product quality cannot be ensured. Furthermore, the lower part of the connector disclosed in the application above is of an open design, with which the connector could not be sealed as a whole.

### Summary of the Invention

An object of the present invention is to provide an optical module packaging structure to enable the heat generated by the chips inside the optical module to be dispersed effectively.

In an example embodiment, an optical module packaging structure is provided. The optical module comprises a top cover, a bottom plate and a middle housing; wherein a cavity configured to receive an electrical connector is opened on the bottom plate; the middle housing includes a surrounding housing, a traversing plate and a chip carrier; the surrounding housing includes a left side wall and a right side wall in relative positional relationship and a front side wall and a rear side wall in relative positional relationship, and the top cover is mounted on the top of the surrounding housing; the bottom plate is positioned at the bottom of the surrounding housing; the traversing plate extends from the inner side of the left side wall of the surrounding housing to the inner side of the right side wall of the surrounding housing forming two strip-shaped mounting holes at relative positions along the extending direction of the traversing plate, and the strip-shaped mounting holes are configured to allow the two lateral flex boards of the PCB to pass through and extend from the bottom to the top of the traversing plate as the PCB of the optical module being mounted onto the bottom surface of the traversing plate; the chip carrier is disposed on the top surface of the traversing plate and is used for carrying chips generating heat as the optical module working, wherein the surrounding housing, the traversing plate, and the chip carrier are integrally made of metal material.

Preferably, the front lateral side and the rear lateral side of the traversing plate are configured to be separated from the front side wall and the rear side wall of the surrounding housing to form a front gap and a rear gap, and preferably the two gaps are configured as the two strip-shaped mounting holes.

The chip carrier is preferably configured to protrude from the top surface of the traversing plate to facilitate the connection between the chips and the PCB. The chip carrier includes a front carrier, a rear carrier and a middle carrier; wherein the middle carrier is configured to bear an optical transceiver chip of the optical module, which is positioned between the front carrier and the rear carrier. The protrusion height of the middle carrier on the top surface of the traversing plate is greater than either of the protrusion heights of the front carrier and the rear carrier; the front carrier is configured to bear a driver chip of the optical module and extends along the direction from the middle carrier to the front side wall of the surrounding housing; the rear carrier is configured to bear a driver chip of the optical module and extends along the direction from the middle carrier to the rear side wall of the surrounding housing; the protrusion heights of the front carrier and the rear carrier preferably meet the following requirements: when the driver chip is mounted onto the front carrier and the rear carrier, the terminals of the driver chip are aligned with the lead terminals of two lateral flex boards of the PCB extending out of the top surface of the traversing plate.

In order to easily define an area for mounting the lateral flex boards and a lens assembly onto the traversing plate, a plurality of vertical cylinders are provided on the top surface of the traversing plate, wherein each of the vertical cylinder extends upwardly along the direction perpendicular to the top surface of the traversing plate. The vertical cylinders are configured to be fit with plugging holes opened on the two lateral flex boards of the PCB or opened on the lens assembly in the optical module respectively.

In order to enlarge the heat transfer area, the optical module packaging structure of the present invention also includes a left bench and a right bench; the bottom surface of the left bench is coupled with the top surface of the traversing plate and the left surface of the left bench is coupled with the left side wall of the surrounding housing, and the top surface of the left bench is attached to the top cover after the top cover being mounted on the surrounding housing; the bottom surface of the right bench is coupled with the top surface of the traversing plate and the right side surface of the right bench is coupled with the right side wall of the surrounding housing, and the top surface of the right bench is attached to the top cover after the top cover being mounted on the surrounding housing; wherein the left bench, the right bench and the top cover are made of metal materials, so that the heat generated by the chips can be transferred not only through the surrounding housing, but also through the left and right benches to the top cover. The increment of the heat transfer area further accelerates the heat transfer rate.

Preferably, the left bench and the right bench are formed integrally with the surrounding housing and the traversing plate so as to avoid forming air gap which may result in a decrease in the heat dissipation performance.

Preferably, the top surface of the left bench and the top surface of the right bench are respectively coupled with the top cover by thermal conductive adhesive to seal the upper portion of the inner cavity.

In order to further enlarge the heat transfer area and advance the heat transfer efficiency, fins are provided on the outer side of the left side wall and on the outer side of the right side wall of the surrounding housing respectively, so as to further accelerate the heat transfer rate.

In another aspect of the present invention, an optical module is provided. The optical module is configured to include a top cover, a bottom plate, a middle housing, a PCB, chips that generate heat as working, a lens assembly, and an optical cable; wherein a cavity configured to receive an electrical connector is opened on the bottom plate. The middle housing includes a surrounding housing, a traversing plate and a chip carrier; the surrounding housing includes a left side wall and a right side wall in a relative positional relationship and a front side wall and a rear side in a relative positional relationship. The top cover is mounted on the top of the surrounding housing and the bottom plate is positioned at the bottom of the surrounding housing. The traversing plate extends from the inner side of the left side wall of the surrounding housing to the inner side of the right side wall forming two strip-shaped mounting holes at relative positions along the extending direction of the traversing plate. The chip carrier is disposed on the top surface of the traversing plate and the chips are arranged on the chip carrier. The PCB includes a PCB rigid board and two lateral flex boards respectively extending outwardly from the front side and rear side of the PCB rigid board. The PCB rigid board is disposed below the traversing board, and the two lateral flex boards respectively pass through the strip-shaped mounting holes from bottom to top and then are bent to attach to the top surface of the traversing plate; the lens assembly is mounted on the traversing plate by which the chips are covered; the optical cable extending out of the cavity enclosed by the surrounding housing are configured to connect to the lens assembly for transmitting optical signal. The surrounding housing, the traversing plate, and the chip carrier are integrally made of metal material. The PCB, the lens assembly and the chips are packaged in a housing enclosed by the top cover, the surrounding housing and the bottom plate.

In order to facilitate the connection of the chips to the PCB, a recessed area is formed respectively on each of the two lateral flex boards, technically on the side facing to the chips, and at least a portion of the chips is positioned in the recessed areas. The three lateral sides enclosing each of the recessed area are configured to be the lead terminals of each of the lateral flex board which are connected to terminals of the chips correspondingly.

Further, one or more electronic components protruding from the top surface of the PCB rigid board are disposed thereon. In order to ensure the close fit between the PCB rigid board and the traversing plate, one or more grooves matched with the shape of the top of the electronic component are provided on the bottom surface of the traversing plate; when the PCB is mounted on the traversing plate, the electronic component on the PCB rigid board protrudes into the groove and the top surface of the electronic component attaches to the bottom surface of the groove. According to these arrangements, the heat generated by the electronic components, which is comparatively small, also can be promptly transferred through the middle housing.

In order to ensure the stability of the package structure, and further improve the sealing performance for the chips, the PCB and the lens assembly, the chips are preferably coupled with the chip carrier through thermal conductive paste; wherein the top surface of the PCB rigid board is adhered to the bottom surface of the traversing plate by thermal conductive adhesive; the bottom surface of the PCB rigid board is adhered to the bottom plate; a groove is formed on the bottom surface of the lens assembly and the chips are disposed in the groove, and the bottom walls of the lens assembly enclosing the groove is adhered to the lateral flex boards of the PCB.

In order to define an area for mounting the PCB and the electrical connector inside the optical module so as to enable the electrical contacts of the electrical connector to be in contact with corresponding electrical contacts on the PCB accurately, as well as define an area thereon for plugging onto an external main board, positioning cylinders are further provided on the bottom surface of the traversing plate. The positioning cylinders extend downwardly out of the surface where the bottom of the surrounding housing is in and pass through positioning holes opened on the PCB rigid board. For those optical modules with an electrical connector, the electrical connector may be arranged in the cavity of the bottom plate, wherein through holes configured to be used for positioning are opened on the electrical connector, through which the positioning cylinders pass to limit the area for mounting the electrical connector inside the optical module. In order to prevent the electrical connector from removal from the optical module, the positioning cylinders are designed to be in interference fit with the through holes to facilitate the assembly and disassembly operation of the electrical connector on the optical module.

Further, electrical contacts are disposed on the bottom surface of the PCB substrate, and the electrical contacts on the bottom surface are in contact with the electrical contacts disposed on the top surface of the electrical connector to transmit electrical signal effectively.

Compared with the prior art, the advantages and positive effects of the present invention are: the present invention provides a novel design on the housing of the optical module, in which the chip carrier and the housing of the optical module are made of metal materials integrally. Therefore, a heat dissipation channel merely made of metal materials is formed between the chip carrier and the optical module housing. Chips inside the optical module generating heat are arranged on the chip carrier so that the heat could be transferred to the housing through the heat dissipation channel without air gaps or thermal conductive paste and therefore the bottleneck caused by traditional heat transfer channel could be overcome by aspects as lowering the thermal resistance between the chips and the housing significantly, advancing thermal transfer rate and expanding the heat transfer area. Based on this structure, the heat dissipation problem of the optical module is effectively solved. In addition, since the chip and PCB of the optical module are disposed in the housing, the sealing performance of the optical module could be boosted, and the ability to withstand harsh environments is increased, so that the high-efficiency heat dissipation and circuit sealing can be perfectly performed together with advantages of good vibration resistance, small numbers of components and simple assembly process.

Other features and advantages of the present invention will become clearer by reference to detailed description of embodiments with accompanying figures which follow.

### Brief Description of the Drawings

To further clarify the above and other advantages and features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:
Fig.1 is an exploded view of an overall structure of an embodiment of an optical module proposed by the present invention;
Fig.2 is a schematic view showing the top surface of the middle housing of Fig.1;
Fig.3 is a schematic view showing the bottom surface of the middle housing of Fig.1;
Fig.4 is an exploded view showing the middle housing and PCB of Fig.1;
Fig.5 is an assembled view showing the middle housing and the PCB of Fig.1;
Fig.6 is an exploded view showing the middle housing, the bottom plate and the electrical connector in which the PCB is assembled of Fig.1;
Fig.7 is an exploded view showing the middle housing, the lens assembly and the optical cable in which the PCB is assembled of Fig.1;
Fig.8 is an assembled view showing the middle housing, the lens assembly and the optical cable in which the PCB is assembled of Fig.1;
Fig.9 is an exploded view showing the top cover and the bottom plate of Fig.8;
Fig.10 is a top view of the integrated structure of the optical module assembled of the present invention;
Fig.11 is a bottom view of the integrated structure of the optical module assembled of the present invention;
Fig.12 is a cross-sectional view of the optical module along the line A-A of Fig.10;
Fig.13 is a cross-sectional view of the optical module along the line B-B of Fig.10.

### Detailed Description

The specific embodiments of the present invention will be further described in detail with reference to the accompanying drawings.

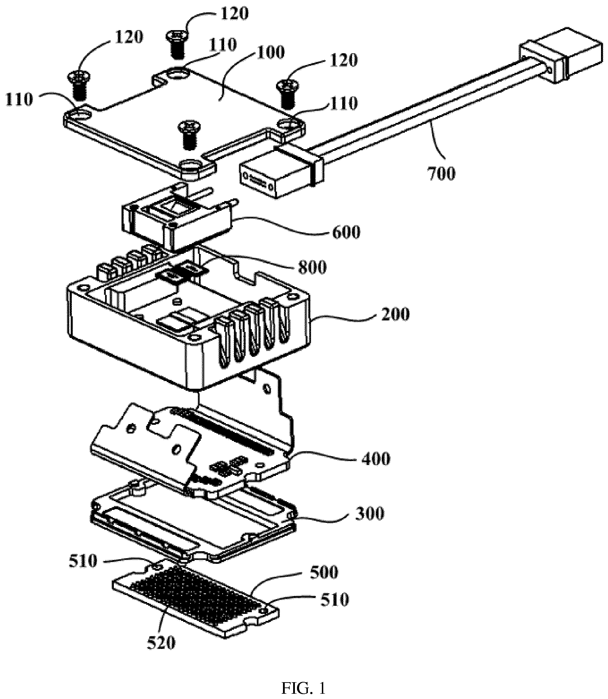

An example embodiment particularly relates to a technical solution to the heat dissipation problem of chips of optical module, which are heating up easily as working (such as optical transceiver chips, driver chips, etc., when the optical module starts to work, the temperature of those components goes up quickly; as the temperature reaches its maximum value, it may cause a problem that the performance of the chips gets worse, under which the failure of the chips may occur). Specifically, the present embodiment provides an optical module packaging structure with good heat dissipation performance. As shown in Fig.1, the optical module packaging structure comprises main components including a top cover 100, a middle housing 200, and a bottom plate 300, with which internal components, such as heat-generating chips 800, a PCB 400, a lens assembly 600, and a portion of optical cable 700 are packaged. The packaged optical module may further be provided with an electrical connector 500 at its bottom to meet various design requirements, which may facilitate the assembly as the optical module is plugged to the main board of an external system and ensure reliable transmission of electrical signals.

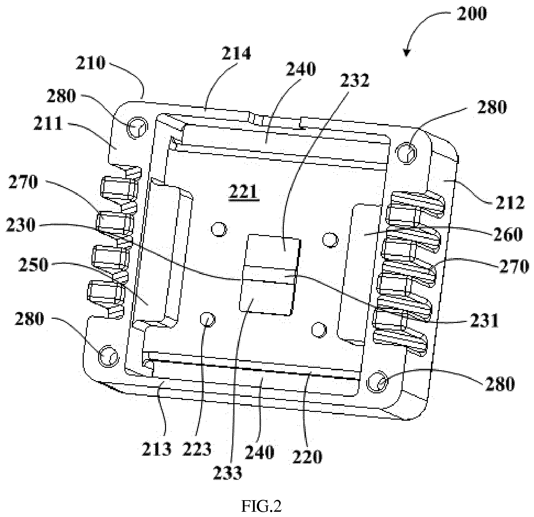

In the present embodiment the middle housing 200 mainly supports the components as the heat-generating chips 800, the PCB 400 and the lens assembly 600, and also serves as a thermal conductive channel to transfer the generated heat to the outside environment. As shown in Fig.2, the middle housing includes a surrounding housing 210, a traversing plate 220, and a chip carrier 230. The surrounding housing 210, the traversing plate 220 and the chip carrier 230 are made of metal materials and formed integrally. Therefore, the heat generated is dissipated from the chip carrier to the optical module housing through merely conductive metal materials without any air gaps or thermal conductive adhesives exist. These arrangements with greater heat dissipation performance are effective to break through the bottleneck of the prior art.

Specifically, the surrounding housing 210 defines the outer peripheral frame of the middle housing 200 of the present embodiment, which includes a left side wall 211, a right side wall 212, a front side wall 213 and a rear side wall 214, as shown in Fig.2. It is to be understood that the directions described, as front, rear, left and right, are defined on the basis of the positional relationship shown in Fig.2, which are merely for depicting the relative positional relationship of the side walls clearly but not meant to be restriction. The traversing plate 220 is positioned within an inner cavity enclosed by the surrounding housing 210. The traversing plate 220 extends from the left side wall 211 of the surrounding housing 210 to the right side wall 212 thereof. Two strip-shaped mounting holes 240 are respectively formed on the front and rear sides of the traversing plate 220 for mounting the PCB 400 onto the traversing plate 220. As a preferred example of the embodiment, the front and rear sides of the traversing plate 220 are configured to be separated from the front side wall 213 and the rear side wall 214 of the surrounding housing 210 so as to form two gaps at the front and back respectively. As shown in Fig.2, the two gaps could be regarded as the two strip-shaped mounting holes 240 as required. The differences between the lengths of the left and right sides of the traversing plate 220 and the lengths of the left side wall 211 and the right side wall 212 of the surrounding housing 210 are equal to the widths of the two gaps, The expansion of the contact area between the traversing plate 220 and the left side wall 211 and the right side wall 212 could accelerate the heat transfer rate. Alternatively, the two strip-shaped mounting holes 240 could be directly opened on the traversing plate 220, which is not specifically limited in this embodiment.

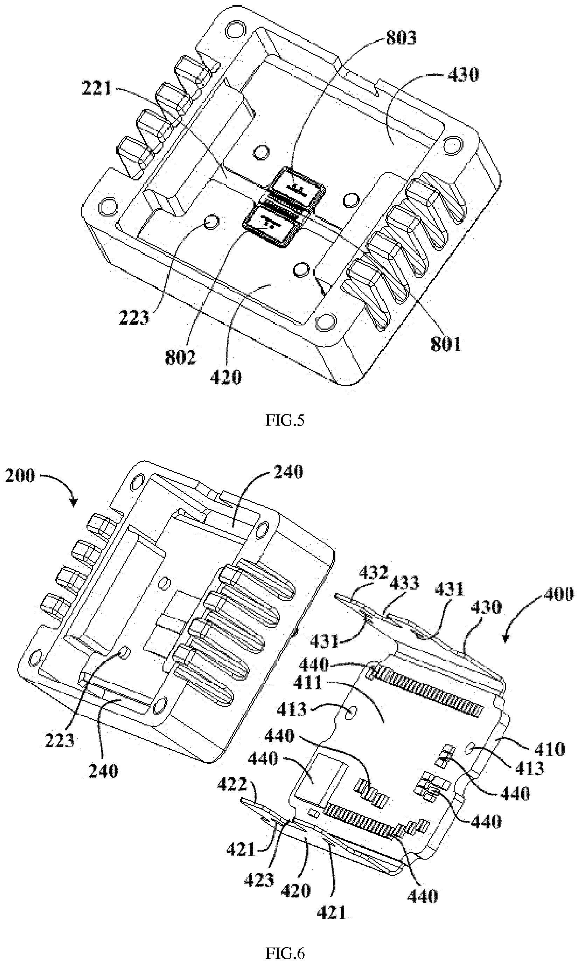

The chip carrier 230 is disposed on the top surface 221 of the traversing plate 220, as shown in Fig.2, preferably positioned at the center of the top surface, so as to facilitate the mounting of the PCB 400 on the traversing plate 220. Specifically, the chip carrier 230 is preferably configured to protrude from the top surface 221 of the traversing plate 220 so as to facilitate the connection between the chips 800 and the PCB 400. The chip carrier 230 of the present embodiment is integrally formed with the traversing plate 220 to form a convex structure with a middle portion higher than the front and rear portions thereof. The chip carrier 230 includes a front carrier 233, a rear carrier 232 and a middle carrier 231, wherein the front carrier 233 is configured to support the driver chip 802 of the heat-generating chips 800; with reference to Fig.5, the front carrier 231 extends along the direction from the middle carrier 231 to the front side wall 213 of the surrounding housing 210; the rear carrier 232 is configured to support the driver chip 803 of the heat-generating chips 800 and the rear carrier 231 extends along the direction from the middle carrier 231 to the rear side wall 214 of the surrounding housing 210; the middle carrier 231 is configured to support the optical transceiver chip 801. For those 24-channel optical modules, the optical transceiver chip 801 could be configured to include two rows from front to rear, and each row is configured with 12 optical ports to support the transmission and reception of 24 optical signals. The front row of the optical transceiver chip 801 is connected to the driver chip 802 on the front carrier 233, and the rear row of the optical transceiver chip 801 is connected to the driver chip 803 on the rear carrier 232. The optical transceiver chip 801 is controlled by the driver chips 802 and 803. The middle carrier 231 is positioned between the front carrier 233 and the rear carrier 232, and the protrusion height of the middle carrier from the top surface of the traversing plate 221 is greater than either of the protrusion heights of the front carrier 233 and the rear carrier 232. Such arrangements could facilitate the connecting between the transceiver chip 801 and the driver chips 802, 803.

In this embodiment, the chips 800 are preferably attached to the chip carrier 230 using thermal conductive adhesive so that the heat generated by the chips 800 could be quickly transferred to the chip carrier 230, and then rapidly to the traversing plate 220, finally be dissipated to a surrounding environment through the surrounding housing 210. A radiator with sufficient heat transfer area is formed with the integral metal structure formed by the chip carrier 230, the traversing plate 220 and the surrounding housing 210 and the open design of the outside of the surrounding housing 210, namely the housing of the optical module and the radiator are designed as an integral. The chips 800 directly attach on the radiator, such that there would be no extra media between the chips and radiator and the bottleneck caused by the thermal conductive channel on the contact interface is eliminated, the thermal resistance of the thermal conductive channel is lowered and the heat dissipation effect is enhanced.

In order to further enlarge the heat transfer area and boost the efficiency of heat dissipation, fins 270 are provided and positioned on the outside of the left side wall 211 of the surrounding housing and the outside of the right side wall 212 of the surrounding housing respectively. As shown in Fig.2, the fins 270 and the surrounding housing 210 are formed integrally to transfer the heat on the surrounding housing 210 to the outside environment rapidly through the expanded heat transfer area, thereby further accelerating the heat transfer rate.

In addition, the top cover 100 serves as an auxiliary element to transfer the heat to the outside environment. To be specific, a left bench 250 and a right bench 260 are further provided on the top surface 221 of the traversing plate 220, as shown in Fig.2, the left bench 250 and the right bench 260 are also made of thermally conductive metal materials and are preferably integrally formed with the traversing plate 220 to further prevent the air gap and thermally conductive paste in the thermally conductive path.

Specifically, the left bench 250 may be positioned on the left side of the traversing plate 220 and its bottom surface is coupled with the top surface 221 of the traversing plate 220, and the left side surface of the left bench 250 is coupled with the inner side of the left side wall 211. Accordingly, after being mounted onto the surrounding housing 210, the top cover 100 is just attached to the top surface of the left bench 250. Similarly, the right bench 260 may be positioned on the right side of the traversing plate 220 and its bottom surface is coupled with the top surface 221 of the traversing plate 220, and the right side surface of the right bench 260 is coupled with the inner side of the right side wall 212. Accordingly, after being mounted onto the surrounding housing 210, the top cover 100 is just attached to the top surface of the right bench 260. In the present embodiment, the surrounding housing 210, the left bench 250 and the right bench 260 are formed integrally.

The top cover 100 and the surrounding housing 210 are in a threaded connection, with reference to Fig.1 and Fig.2, through holes 110 are opened at the four corners of the top cover 100, and screw holes 280 may be opened at the four corners of the surrounding housing 210. Four screws 120 respectively pass through the four through holes on the top cover 100 and then are screwed with the four screw holes 280 in the surrounding housing 210, such that the top cover 100 is fixed and mounted onto the middle housing 100.

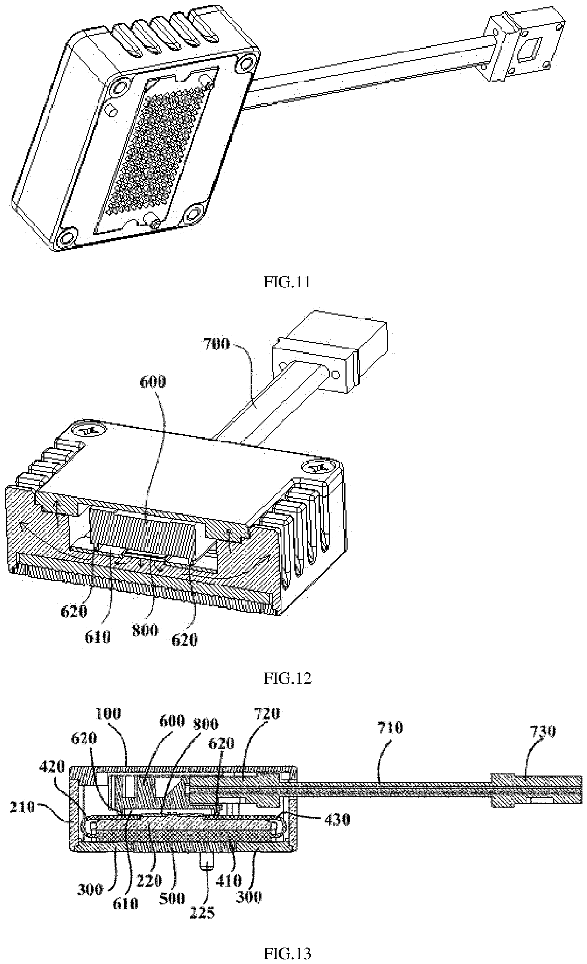

In this embodiment, the top cover 100 is made of metal material with good thermal conductivity, and the bottom surface of the top cover 100 is preferably connected with the top surface of the left bench 250 and the top surface of the right bench 260 through a thermal conductive adhesive to eliminate air gaps. According to these arrangements, the heat generated could transfer from the chip carrier 230 to the traversing plate 220, and then to the left bench 250 and the right bench 260, finally transfer to the top cover 100 via the left bench 250 and the right bench 260 and then to the outside. As shown in Fig.12, the thermal conductive path of the heat generated by the chips 800 is as indicated by the arrow in Fig.12.

In this embodiment, the threaded connection of the top cover 100 and the middle housing with thermal conductive adhesive could seal the upper portion of the inner cavity enclosed by the middle housing 200 and the top cover 100. The top cover 100 functions in aspects of sealing and heat dissipation.

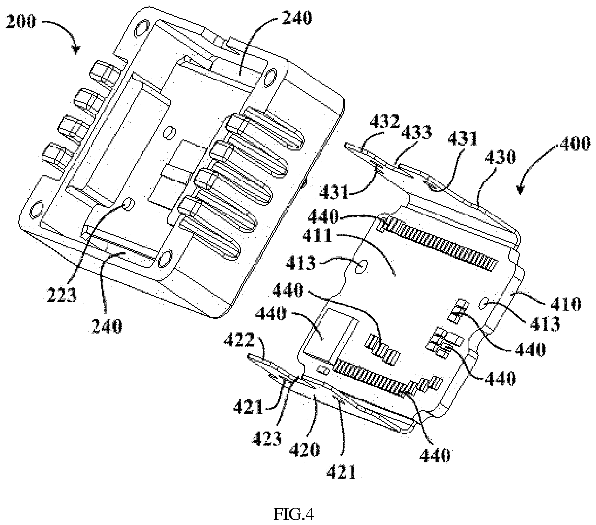

The mounting and fixing of the PCB 400 on the middle housing 200 will be described in detail with reference to Fig.4 and Fig.5.

As shown in Fig.4, the PCB 400 of the present embodiment is a rigid-flexible one-piece PCB including a PCB rigid board 410 and two lateral flex boards, namely 420, 430. The two lateral flex boards 420, 430 are positioned on the front and rear sides of the PCB rigid board 410, and respectively extend outwardly from the front and rear sides of the PCB rigid board 410. As assembling, firstly, bending the two lateral flex boards 420, 430 upwardly to be perpendicular to the surface where the PCB rigid plate 410 is positioned; then placing the PCB 400 beneath the traversing plate 220 and enabling the two lateral flex boards 420, 430 to pass through the two strip-shaped mounting holes from bottom to top, that is to say, the two lateral flex boards 420, 430 extends upwardly to positions beyond the traversing plate 220; and then bending the two lateral flex boards 420, 430 to be parallel to the top surface 221 of the traversing plate so as to wrap up the traversing plate 220 as shown in Fig.5.

Vertical cylinders 223 may be provided on the top surface 221 of the traversing plate 220, as shown in Fig.2, four vertical cylinders are preferably positioned and extend upwardly which are perpendicular to the top surface 221 of the traversing plate. Two plugging holes 421 and 431 are preferably provided on each of the lateral flex boards 420 and 430. After the two lateral flex boards 420, 430 are bent to attach to the top surface of the traversing plate 220, the four vertical cylinders are just inserted into the plugging holes 421 and 431 positioned on the two lateral flex boards 420, 430 to prevent the PCB 400 from removal on the traversing plate 220.

Since the terminals of the driver chips 802, 803 are positioned on the periphery of the chip, as shown in Fig.4, one side 422, 432 of each of the lateral flex boards 420,430 is preferably provided a recessed area 423, 433 respectively to facilitate the connection between the terminals of the driver chips 802, 803 and the lead terminals on the lateral flex boards. The side 422 and the side 432 is the one side of each of the lateral flex boards facing the chips 800. After the traversing plate 220 is being wrapped up by the lateral flex boards, the three sides of recessed area 423, 433 just enclose the driver chip 802, 803, as shown in Fig.5. The three sides of each of the recessed areas 423, 433 are used as the lead terminals of the lateral flex boards 420, 430, and are connected to the terminals on the chips 800 through leading wires. In the present embodiment, flex leading wires connected to the PCB rigid board 410 are provided and the electrical connection between the chips 800 and the PCB rigid board 410 could be achieved through coupling the lead terminals of the lateral flex boards 420, 430 with the terminals of the driver chips 802, 803 by the flex leading wires.

In order to further facilitate the connection between the lateral flex boards 420 and 430 and the chips 800, it is designed the protrusion height of the front carrier 233 and the rear carrier 232 from the top surface 221 of the traversing plate to meet the following requirements: when the driver chips 802, 803 are mounted onto the front carrier 233 and the rear carrier 232, the terminals of the driver chips 802, 803 are just aligned with the lead terminals of the lateral flex boards 420, 430.

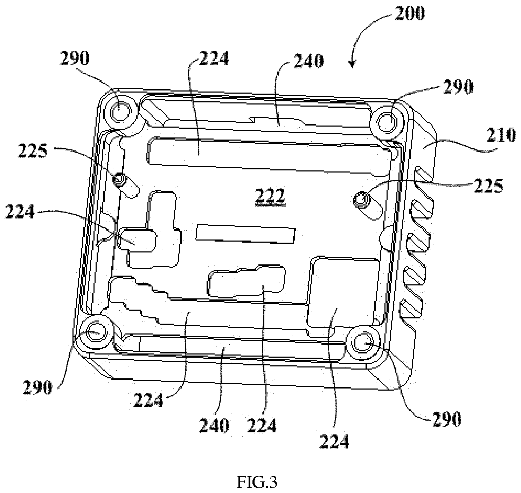

A plurality of electronic components 440 may be soldered on the top surface 411 of the PCB rigid board 410. As shown in Fig.4, the electronic components 440 are higher than the top surface of the PCB rigid board 410. As shown in Fig.3, a plurality of grooves 224 may be opened on the bottom surface 222 of the traversing plate 220 to enable the bottom surface 222 to attach to the top surface 411 of the PCB rigid board 410 after the traversing plate 220 being wrapped up by the PCB 400.The shape of the groove 224 is matched with the shape of the top surface of the electronic component 440. When the PCB 400 is mounted onto the traversing plate 220, the electronic components 440 just protrudes into the groove 224 and the top surface of the electronic component 440 just fits the bottom surface of the groove 224. According to these arrangements, the PCB rigid board 410 could attach to the bottom surface 222 of the traversing plate, and furthermore, the heat generated by the electronic components 440, which is comparatively less than the heat generated by the chips, could be transferred to the traversing plate 220, and then spread to the surrounding housing 210, and dissipate from the surrounding housing to the outside environment at rapidly.

In order to enhance the stability of the assembly of the PCB 400 and the middle housing 200, it is preferable to dispose a thermal conductive adhesive between the top surface 411 of the PCB rigid board 410 and the bottom surface 222 of the traversing plate 220, and the two lateral flex boards 420, 430 are pasted on the top surface 221 of the traversing plate 220 to prevent the PCB 400 from removal on the traversing plate 220 as the optical module working.

In the present embodiment, the rigid-flexible one-piece PCB and the bending and wrapping-up assembly could ensure circuit conversion within small space, which is advantageous of reducing the overall package size of the optical module.

In addition, positioning cylinders 225 are also provided on the bottom surface 222 of the traversing plate 220, as shown in Fig.3. Two positioning cylinders 225 are preferably provided and positioned on the left side and right side of the bottom surface 222. The two positioning cylinders 225 extend downwardly along the direction perpendicular to the bottom surface 222 of the traversing plate to a position beyond the surface of the bottom of the surrounding housing 210, as shown in Fig.6. Two positioning holes 413 are opened on the PCB rigid plate 410, as shown in Fig.4. After the PCB 400 is mounted onto the traversing plate 220, the two positioning cylinders 225 pass through the two positioning holes 413 and extend downwards. Screw holes 290 are correspondingly opened at four corners of the bottom of the surrounding housing 210 for coupling with the main board of an external device as mounting the optical module.

As a preferred example of the present embodiment, the components forming the middle housing 200 are preferably made of metal materials integrally, namely the surrounding housing 210, the traversing plate 220, the chip carrier 230, the left bench 250, the right bench 260, the fins 270, the vertical cylinders 223, and the positioning cylinders 225 are integrally formed by same metal material as a whole. It is used for packaging and also acts as a radiator to effectively dissipate the heat generating chip inside the optical module.

Conductive electrical contacts 450 (such as solder joints) are disposed on the bottom surface 412 of the PCB rigid plate 410, and a cavity 310 is opened at the bottom plate 300. The position and the size of the cavity 310 is determined by the position and size of the positioning cylinders 225, that is to say, when the bottom plate 300 is mounted onto the bottom of the surrounding housing 210, the conductive electrical contacts 450 and the positioning cylinders 225 are exposed from the cavity 310. The size of the cavity 310 further relates to the size of the electrical connector 500, as shown in Fig.6. Preferably, the dimension of the cavity 310 is slightly larger than the outer dimension of the electrical connector 500 so that the electrical connector 500 can be inserted into the cavity 310.

Two through holes 510 for positioning are opened on the electrical connector 500, as shown in Fig.1 and Fig.6. The positioning through holes 510 are in interference fit with the positioning cylinders 225. The electrical connector 500 is fixed to the bottom of PCB rigid board 410 after the positioning cylinders 225 being inserted into the positioning through holes 510, as shown in Fig.11, and the lower cavity of the optical module could be packaged with the bottom plate 300 and the electrical connector 500.

Conductive electrical contacts 520 (for example, metal elastic plates) may be disposed on the top surface of the electrical connector 500, and conductive electrical contacts 530 which are in electrical communication with the conductive electrical contacts 520 (for example metal elastic plates or solder joints) are disposed on the bottom surface of the electrical connector 500, with reference with Fig.1 and Fig.6. After the electrical connector being assembled into position, the conductive electrical contacts 520 on its top surface are just in contact with the conductive electrical contacts 450 on the bottom of the PCB rigid board 410 and communicated. The conductive electrical contacts 530 on the bottom surface of the electrical connector are in contact with corresponding conductive electrical contacts of the main board as the optical module is being mounted onto the main board of an external device to ensure the stability of signal transmission between the optical module and the main board.

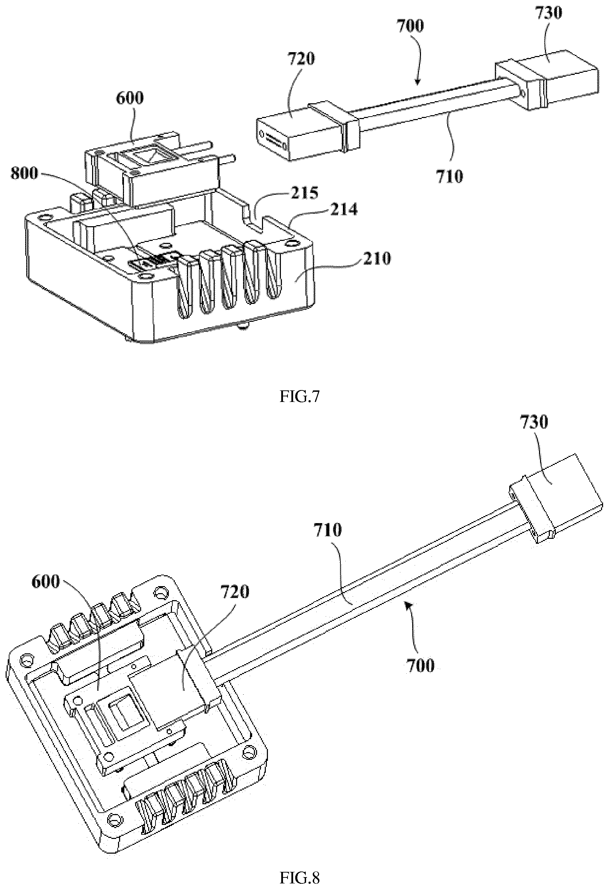

In Fig.7 to Fig.9, the packaging structure of the lens assembly 600 and the optical cable 700 in the optical module is shown in details. As shown in Fig.7, after the PCB 400 being mounted on the traversing plate 220 in position, the lens assembly 600 could be mounted on above the chips 800 and cover the chips 800 completely so as to seal and fix the periphery and protect the laser and bare driver chips within. Specifically, a groove 610 slightly larger than the outer dimension of the chips 800 may be opened at the bottom of the lens assembly 600, as shown in Fig.12 and 13. The bottom wall 620 enclosing the groove 610 of the lens assembly 600 is fixed on the lateral flex boards 420, 430 of the PCB 400, as an example, the bottom wall 620 of the lens assembly 600 is fixedly pasted on the lateral flex boards 420, 430. If a portion of the traversing plate 220 is still exposed even as the lateral flex boards 420, 430 being attached onto the top surface 221 of the traversing plate, the exposed portion of the traversing plate 220 could be fixed on the bottom wall 620 of the lens assembly 600 by dispensing adhesives to enhance the firmness of the lens assembly 600 and sealing performance.

One of the optical connectors 720 of the optical cable 700 is plugged into the lens assembly 600 and placed in the inner cavity enclosed by the surrounding housing 210, as shown in Fig.8. A notch 215 is formed on the rear side wall 214 of the surrounding housing 210, with reference to the Fig.7, the width of the notch 215 is substantially the same as the width of the optical fibers 710 of the optical cable 700 so that the optical fibers 710 could protrude from the inner cavity enclosed by the surrounding housing 210 and extend to the other optical connector 730 of the optical cable 700 and connect.

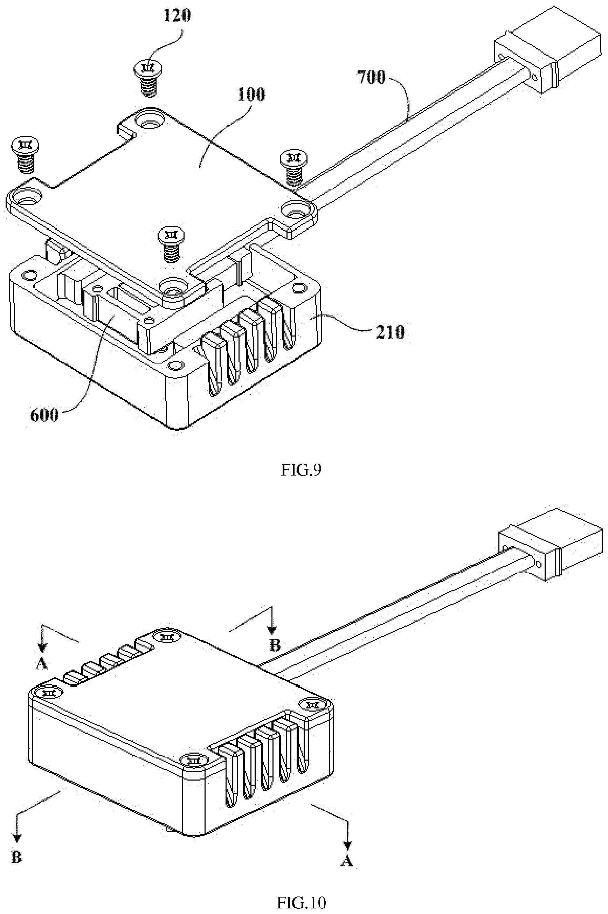

As shown in Fig.9, after the lens assembly 600 and the optical cable 700 being assembled in place, the top cover 100 is fixed on the top of the surrounding housing 210 by screws 120 to package the optical module as a whole.

In Fig.10 and Fig.11, a top view and a bottom view of the optical module are shown as it is well packaged. The cavity of the optical module is sealed with the top cover 100 and the bottom plate 300 for positioning the circuit elements in the housing. Therefore, the ability of the optical module to withstand harsh environment is enhanced with better operational reliability.

The present invention may be embodiment in other specific forms. The detailed embodiments are to be considered in all respects only as illustrative and not restrictive. The scope of the invention is, therefore, indicated by the appended claims rather than by the foregoing description.

## Claims

1. An optical module packaging structure comprising:
a top cover (100);
a bottom plate (300) with a cavity (310) configured to receive an electrical connector (500);
a middle housing (200) including:
a surrounding housing (210) comprising a left side wall (211) and a right side wall (212), which are in relative positional relationship; and a front side wall (213) and a rear side wall (214) which are in relative positional relationship; wherein the top cover (100) is mounted on the top of the surrounding housing (210) and the bottom plate (300) is positioned at the bottom of the surrounding housing (210);
a traversing plate (220) extending from the inner side of the left side wall (211) of the surrounding housing (210) to the inner side of the right side wall (212) of the surrounding housing (210) to form two strip-shaped mounting holes (240) at relative positions along the extending direction of the traversing plate (220), wherein the strip-shaped mounting holes (240) are configured to allow the two lateral flex boards (420, 430) of a PCB (400) to pass through and extend from the bottom to the top of the traversing plate (220) as the PCB (400) of the optical module being mounted onto the bottom surface (222) of the traversing plate (220); and
a chip carrier (230), which is disposed on the top surface (221) of the traversing plate (220), configured to bear heat-generating chips (800) as the optical module working; and
wherein the surrounding housing (210), the traversing plate (220), and the chip carrier (230) is integrally made of metal material.

2. The optical module packaging structure of claim 1, wherein the front lateral side and the rear lateral side of the traversing plate (220) are configured to be separated from the front side wall (213) and the rear side wall (214) of the surrounding housing (210) to form a front gap and a rear gap, and the two gaps are configured as the two strip-shaped mounting holes (240).

3. The optical module packaging structure of claim 1, wherein the chip carrier (230) is configured to protrude from the top surface (221) of the traversing plate (220), including a front carrier (233), a rear carrier (232) and a middle carrier (231);
the middle carrier (231) is configured to bear an optical transceiver chip (801) of the optical module, which is positioned between the front carrier (233) and the rear carrier (232); the protrusion height of the middle carrier (231) on the top surface (221) of the traversing plate (220) is greater than either of the protrusion heights of the front carrier (233) and the rear carrier (232);
the front carrier (233) is configured to bear a driver chip (802) of the optical module and extends along the direction from the middle carrier (231) to the front side wall (213) of the surrounding housing (210);
the rear carrier (232) is configured to bear a driver chip (803) of the optical module and extends along the direction from the middle carrier (231) to the rear side wall (214) of the surrounding housing (210);
the protrusion heights of the front carrier (233) and the rear carrier (232) meet the following requirements: when the driver chips (802, 803) are mounted onto the front carrier (233) and the rear carrier (232), the terminals of the driver chips (802, 803) are aligned with the lead terminals of two lateral flex boards (420, 430) of the PCB extending out of the top surface (221) of the traversing plate (220).

4. The optical module packaging structure of claim 1, wherein a plurality of vertical cylinders (223) are provided on the top surface (221) of the traversing plate (220), wherein each of the vertical cylinders (223) extends upwardly along the direction perpendicular to the top surface (221) of the traversing plate (220), and the vertical cylinders (223) are configured to be fit with plugging holes (421, 431) opened on the two lateral flex boards (420, 430) of the PCB (400) or opened on the lens assembly (600) in the optical module respectively.

5. The optical module packaging structure of any one of claim 1 to claim 4, further including:
a left bench (250), wherein the bottom surface of the left bench (250) is coupled with the top surface (221) of the traversing plate (220) and the left surface of the left bench (250) is coupled with the left side wall (211) of the surrounding housing (210), and the top surface of the left bench (250) is attached to the top cover (100) after the top cover (100) being mounted on the surrounding housing (210); and
a right bench (260), wherein the bottom surface of the right bench (260) is coupled with the top surface (221) of the traversing plate (220) and the right side surface of the right bench (260) is coupled with the right side wall (212) of the surrounding housing (210), and the top surface of the right bench (260) is attached to the top cover (100) after the top cover (100) being mounted on the surrounding housing (210); and
the left bench (250), the right bench (260) and the top cover (100) are made of metal materials.

6. The optical module packaging structure of claim 5, wherein the top surface of the left bench (250) and the top surface of the right bench (260) are respectively coupled with the top cover (100) by thermal conductive adhesive.

7. The optical module packaging structure of any one of claim 1 to claim 4, wherein fins (270) are provided on the outer side of the left side wall (211) and on the outer side of the right side wall (212) of the surrounding housing (210) respectively.

8. An optical module, comprising the optical module packaging structure of any one of claim 1 to claim 7, further comprising:
a PCB (400) including a PCB rigid board (410) and two lateral flex boards (420, 430) respectively extending outwardly from the front side and rear side of the PCB rigid board (410), the PCB rigid board (410) is disposed beneath the traversing board (220), and the two lateral flex boards (420, 430) respectively pass through the strip-shaped mounting holes (240) from bottom to top and then are bent to attach to the top surface (221) of the traversing plate (220);
chips (800) that generate heat as working arranged on the chip carrier (230);
a lens assembly (600) mounted on the traversing plate (220) by which the chips (800) are covered;
an optical cable (700) configured to connect to the lens assembly (600) for transmitting optical signal, which extends out of an inner cavity enclosed by the surrounding housing (210);
wherein the PCB (400), the lens assembly (600) and the chips (800) are packaged in a housing enclosed by the top cover (100), the surrounding housing (210) and the bottom plate (300).

9. The optical module of claim 8, wherein a recessed area (423, 433) is formed respectively on each of the two lateral flex boards (420, 430), the recessed areas (423, 433) are respectively disposed on the side of the two lateral flex boards (420, 430) facing to the chips (800), and at least a portion of the chips (800) is positioned in the recessed areas (423, 433). The three lateral sides enclosing each of the recessed area (423, 433) are configured to be the lead terminals of each of the lateral flex board (420, 430) which are connected to terminals of the chips (800) correspondingly.

10. The optical module of claim 9, wherein one or more electronic components (440) protruding from the top surface (411) of the PCB rigid board (410) are disposed thereon, one or more grooves (224) matched with the shape of the top of the electronic component (440) are provided on the bottom surface (222) of the traversing plate (220); when the PCB (400) is mounted on the traversing plate (220), the electronic component (440) on the PCB rigid board (410) protrudes into the groove (224) and the top surface of the electronic component (440) attaches to the bottom surface of the groove (224).

11. The optical module of claim 10, wherein the chips (800) are coupled with the chip carrier (230) through thermal conductive paste; wherein the top surface (411) of the PCB rigid board (410) is adhered to the bottom surface (222) of the traversing plate (220) by thermal conductive adhesive; the bottom surface (412) of the PCB rigid board (410) is adhered to the bottom plate (300); a groove (610) is formed on the bottom surface of the lens assembly (600) and the chips (800) are disposed in the groove (610), and the bottom walls of the lens assembly (600) enclosing the groove (610) is adhered to the lateral flex boards (420, 430) of the PCB (400).

12. The optical module of any one of claim 8 to 11, wherein positioning cylinders (225) are further provided on the bottom surface (222) of the traversing plate (220); the positioning cylinders (225) extend downwardly out of the surface where the bottom of the surrounding housing (210) is in and pass through positioning holes (413) opened on the PCB rigid board (410), and extend through the cavity (310) on the bottom plate (300).

13. The optical module of claim 12, further including:
an electrical connector (500) configured to be positioned in the cavity (310) on the bottom plate (300), through holes (413) configured to be used for positioning are opened on the electrical connector (500), through which the positioning cylinders (225) pass and be in interference fit with the through holes (413).

14. The optical module of claim 13, wherein electrical contacts (520) are disposed on the bottom surface of the PCB rigid board (410), and the electrical contacts (520) on the bottom surface are in contact with the electrical contacts (520) disposed on the top surface of the electrical connector (500).

## Patentansprüche

1. Eine optische Modul-Paketstruktur, umfassend:
eine obere Abdeckung (100);
eine Bodenplatte (300) mit einem Hohlraum (310), der zur Aufnahme eines elektrischen Verbinders (500) konfiguriert ist,
ein mittleres Gehäuse (200) umfassend:
ein umgebendes Gehäuse (210) umfassend eine linke Seitenwand (211) und eine rechte Seitenwand (212), die in einer relativen Positionsbeziehung stehen; und eine vordere Seitenwand (213) und eine hintere Seitenwand (214), die in einer relativen Positionsbeziehung stehen; wobei die obere Abdeckung (100) auf der Oberseite des umgebenden Gehäuses (210) montiert ist und die Bodenplatte (300) auf der Unterseite des umgebenden Gehäuses (210) positioniert ist;
eine durchquerende Platte (220), die sich von der Innenseite der linken Seitenwand (211) des umgebenden Gehäuses (210) zur Innenseite der rechten Seitenwand (212) des umgebenden Gehäuses (210) ausdehnt, um zwei streifenförmige Befestigungslöcher (240) an relativen Positionen entlang der Ausdehnungsrichtung der durchquerenden Platte (220) zu bilden, wobei die streifenförmigen Befestigungslöcher (240) so ausgestaltet sind, dass sie die beiden lateralen Flexplatinen (420, 430) einer PCB (400) ermöglichen, von unten nach oben der durchquerenden Platte (220) zu durchlaufen und auszudehnen, wenn PCB (400) des optischen Moduls auf die Unterseite (222) der durchquerende Platte (220) montiert wird; und
einen Chipträger (230), der auf der Oberseite (221) der durchquerenden Platte (220) angeordnet ist und so konfiguriert ist, dass er beim Arbeiten des optischen Moduls wärmeerzeugende Chips (800) trägt; und
wobei das umgebende Gehäuse (210), die durchquerende Platte (220) und der Chipträger (230) integral aus Metallmaterial bestehen.

2. Die optische Modul-Paketstruktur gemäß Anspruch 1, wobei die vordere laterale Seite und die hintere laterale Seite der durchquerenden Platte (220) so konfiguriert sind, dass sie von der vorderen Seitenwand (213) und der hinteren Seitenwand (214) des umgebenden Gehäuses (210) getrennt sind, um einen vorderen Spalt und einen hinteren Spalt zu bilden, und die zwei Spalte sind als zwei streifenförmige Befestigungslöcher (240) konfiguriert.

3. Die optische Modul-Paketstruktur gemäß Anspruch 1, wobei der Chipträger (230) so konfiguriert ist, dass er aus der Oberseite (221) der durchquerenden Platte (220) herausragt, umfassend einen vorderen Träger (233), einen hinteren Träger (232) und einen mittleren Träger (231);
der mittlere Träger (231) ist konfiguriert, um einen optischen Transceiver-Chip (801) des optischen Moduls zu tragen, der zwischen dem vorderen Träger (233) und dem hinteren Träger (232) positioniert ist; die Vorsprungshöhe des mittleren Trägers (231) auf der Oberseite (221) der durchquerenden Platte (220) ist größer als eine der Vorsprungshöhen des vorderen Trägers (233) und des hinteren Trägers (232);
der vordere Träger (233) ist konfiguriert, um einen Treiberchip (802) des optischen Moduls zu tragen und sich entlang der Richtung vom mittleren Träger (231) zur vorderen Seitenwand (213) des umgebenden Gehäuses (210) auszudehnen;
der hintere Träger (232) ist konfiguriert, um einen Treiberchip (803) des optischen Moduls zu tragen und sich entlang der Richtung vom mittleren Träger (231) zur hinteren Seitenwand (214) des umgebenden Gehäuses (210) auszudehnen;
die Vorsprungshöhen des vorderen Trägers (233) und des hinteren Trägers (232) erfüllen die folgenden Anforderungen: wenn die Treiberchips (802, 803) auf dem vorderen Träger (233) und dem hinteren Träger (232) montiert sind, werden die Anschlüsse der Treiberchips (802, 803) auf die Kabelanschlüsse der zwei lateralen Flexplatinen (420, 430) der PCB ausgerichtet, die sich aus der Oberseite (221) der durchquerenden Platte (220) heraus ausdehnen.

4. Die optische Modul-Paketstruktur gemäß Anspruch 1, wobei mehrere vertikale Zylinder (223) auf der Oberseite (221) der durchquerenden Platte (220) vorgesehen sind, wobei jeder der vertikalen Zylinder (223) sich entlang der Richtung senkrecht zur Oberseite (221) der durchquerenden Platte (220) nach oben ausdehnet, und die vertikalen Zylinder (223) sind so konfiguriert, dass sie zu den Verstopfungslöchern (421, 431) passen, die jeweils an den beiden lateralen Flexplatinen (420, 430) der PCB (400) oder an der Linse Elementen (600) im optischen Modul geöffnet sind.

5. Die optische Modul-Paketstruktur gemäß einem der Ansprüche 1 bis 4, weiterhin umfassend:
eine linke Bank (250), wobei die Unterseite der linken Bank (250) mit der Oberseite (221) der durchquerenden Platte (220) gekoppelt ist und die linke Oberfläche der linken Bank (250) mit der linken Seitenwand (211) des umgebenden Gehäuses (210) gekoppelt ist, und die Oberseite der linken Bank (250) an der oberen Abdeckung (100) angebracht wird, nachdem die obere Abdeckung (100) an dem umgebenden Gehäuse (210) montiert wurde; und
eine rechte Bank (260), wobei die Unterseite der rechten Bank (260) mit der Oberseite (221) der durchquerenden Platte (220) gekoppelt ist und die rechte Oberfläche der rechten Bank (260) mit der rechten Seitenwand (212) des umgebenden Gehäuses (210) gekoppelt ist, und die Oberseite der rechten Bank (260) an der oberen Abdeckung (100) angebracht wird, nachdem die obere Abdeckung (100) an dem umgebenden Gehäuse (210) montiert wurde; und
die linke Bank (250), die rechte Bank (260) und die obere Abdeckung (100) bestehen aus Metallmaterialien.

6. Die optische Modul-Paketstruktur gemäß Anspruch 5, wobei die Oberseite der linken Bank (250) und die Oberseite der rechten Bank (260) jeweils durch Wärmeleitklebstoff mit der oberen Abdeckung (100) gekoppelt sind.

7. Die optische Modul-Paketstruktur gemäß einem der Ansprüche 1 bis 4, wobei die Finnen (270) jeweils an der Außenseite der linken Seitenwand (211) und der Außenseite der rechten Seitenwand (212) des umgebenden Gehäuses (210) vorgesehen sind.

8. Ein optisches Modul, umfassend die optische Modul-Paketstruktur gemäß einem der Ansprüche 1 bis 7, weiterhin umfassend:
eine PCB (400) umfassend eine PCB steife Leiterplatte (410) und zwei laterale Flexplatinen (420, 430), die sich jeweils von der Vorderseite und der Rückseite der PCB steifen Leiterplatte (410) nach außen ausdehnen, die PCB steife Leiterplatte (410) unter der durchquerenden Platte (220) angeordnet ist und die beiden lateralen Flexplatinen (420, 430) jeweils von unten nach oben durch die streifenförmigen Befestigungslöcher (240) verlaufen und dann gebogen werden, um an der Oberseite (221) der durchquerenden Platte (220) zu befestigen;
Chips (800), die beim Arbeiten Wärme erzeugen, auf dem Chipträger (230) angeordnet sind;
ein Linse Element (600), das an der durchquerenden Platte (220) angebracht ist, durch das die Chips (800) abgedeckt sind;
ein optisches Kabel (700), das konfiguriert ist, um mit dem Linse Element (600) zum Übertragen eines optischen Signals eine Verbindung herzustellen, das sich aus einem inneren Hohlraum, der von dem umgebenden Gehäuse (210) umschlossen ist, heraus ausdehnet;
wobei die PCB (400), das Linse Element (600) und die Chips (800) in einem Gehäuse verpackt sind, das von der oberen Abdeckung (100), dem umgebenden Gehäuse (210) und der Bodenplatte (300) umschlossen ist.

9. Das optische Modul gemäß Anspruch 8, wobei eine vertiefte Fläche (423, 433) jeweils auf jeder der beiden lateralen Flexplatinen (420, 430) ausgebildet ist, die vertieften Flächen (423, 433) jeweils auf der Seite der beiden lateralen Flexplatinen (420, 430) angeordnet sind, den Chips (800) gegenüberstehen und mindestens ein Teil der Chips (800) in den vertieften Flächen (423, 433) positioniert ist. Die drei lateralen Seiten, die jeden der vertieften Flächen (423, 433) einschließen, sind als die Kabelanschlüsse jeder der lateralen Flexplatinen (420, 430) konfiguriert, die mit den Anschlüssen der Chips (800) entsprechend verbunden sind.

10. Das optische Modul gemäß Anspruch 9, wobei eine oder mehrere elektronische Komponenten (440), die aus der Oberseite (411) der PCB steifen Leiterplatte (410) herausragen, darauf angeordnet sind, eine oder mehrere Nuten (224), die mit der Form der Oberseite der elektronischen Komponente (440) übereinstimmen, an der Unterseite (222) der durchquerenden Platte (220) vorgesehen sind; wenn die PCB (400) auf der durchquerenden Platte (220) montiert ist, ragt die elektronische Komponente (440) auf der PCB steifen Leiterplatte (410) in die Nut (224) hinein und die Oberseite der elektronischen Komponente (440) wird an der Unterseite der Nut (224) befestigt.

11. Das optische Modul gemäß Anspruch 10, wobei die Chips (800) mit dem Chipträger (230) durch Wärmeleitpaste gekoppelt sind; wobei die Oberseite (411) der PCB steifen Leiterplatte (410) durch einen Wärmeleitklebstoff an der Unterseite (222) der durchquerenden Platte (220) anhaftet; die Bodenfläche (412) der PCB steifen Leiterplatte (410) ist an der Bodenplatte (300) befestigt; eine Nut (610) ist auf der Bodenfläche des Linse Elements (600) ausgebildet, und die Chips (800) sind in der Nut (610) angeordnet, und die Bodenwände des Linse Elements (600), die die Nut (610) umschließt, ist auf die lateralen Flexplatinen (420, 430) der PCB (400) befestigt.

12. Das optische Modul gemäß einem der Ansprüche 8 bis 11, wobei Positionierzylinder (225) ferner an der Unterseite (222) der durchquerenden Platte (220) vorgesehen sind; die Positionierzylinder (225) erstrecken sich nach unten aus der Oberfläche heraus, in der sich der Boden des umgebenden Gehäuses (210) befindet, und passieren Positionierungslöcher (413), die auf der PCB steifen Leiterplatte (410) geöffnet sind, und erstrecken sich durch den Hohlraum (310) auf der Bodenplatte (300).

13. Das optische Modul gemäß Anspruch 12, weiterhin umfassend: einen elektrischen Verbinder (500), der so konfiguriert ist, dass er in dem Hohlraum (310) auf der Bodenplatte (300) positioniert werden kann, Durchgangslöcher (413), die konfiguriert sind, um zum Positionieren verwendet zu werden, werden an dem elektrischen Verbinder (500) geöffnet, durch den die Positionierungszylinder (225) passieren und in Presspassung mit den Durchgangslöchern (413) stehen.

14. Das optische Modul gemäß Anspruch 13, wobei Leitfähige Kontakte (520) auf der Unterseite der PCB steifen Leiterplatte (410) angeordnet sind und die leitfähige Kontakte (520) auf der Unterseite in Kontakt mit den leitfähigen Kontakten (520) sind, die auf der Oberseite des elektrischen Verbinders (500) angeordnet sind.

## Revendications

1. Structure de conditionnement de module optique comprenant :
un couvercle supérieur (100) ;
une plaque inférieure (300) avec une cavité (310) configurée pour recevoir un connecteur électrique (500) ;
un boîtier central (200) comportant :
un boîtier d'entourage (210) comprenant une paroi latérale gauche (211) et une paroi latérale droite (212) qui sont dans une relation de position relative ; et une paroi latérale avant (213) et une paroi latérale arrière (214) qui sont dans une relation de position relative ; le couvercle supérieur (100) étant monté sur le dessus du boîtier d'entourage (210) et la plaque inférieure (300) étant positionnée en bas du boîtier d'entourage (210) ;
une plaque transversale (220) s'étendant depuis le côté interne de la paroi latérale gauche (211) du boîtier d'entourage (210) jusqu'au côté interne de la paroi latérale droite (212) du boîtier d'entourage (210) pour former deux trous de montage en forme de bande (240) à des positions relatives le long de la direction d'extension de la plaque transversale (220), les trous de montage en forme de bande (240) étant configurés pour permettre aux deux cartes souples latérales (420, 430) d'une PCB (400) de passer à travers et s'étendre du dessous au dessus de la plaque transversale (220) lorsque la PCB (400) du module optique est montée sur la surface inférieure (222) de la plaque transversale (220) ; et
un support de puce (230), qui est disposé sur la surface supérieure (221) de la plaque transversale (220), configuré pour supporter des puces générant de la chaleur (800) lorsque le module optique fonctionne ; et
dans laquelle le boîtier d'entourage (210), la plaque transversale (220) et le support de puce (230) sont entièrement constitués d'un matériau métallique.

2. Structure de conditionnement de module optique de la revendication 1, dans laquelle le côté latéral avant et le côté latéral arrière de la plaque transversale (220) sont configurés pour être séparés de la paroi latérale avant (213) et de la paroi latérale arrière (214) du boîtier d'entourage (210) pour former un espace avant et un espace arrière, et les deux espaces sont configurés comme les deux trous de montage en forme de bande (240).

3. Structure de conditionnement de module optique de la revendication 1, dans laquelle le support de puce (230) est configuré pour faire saillie depuis la surface supérieure (221) de la plaque transversale (220), comportant un support avant (233), un support arrière (232) et un support central (231) ;
le support central (231) est configuré pour supporter une puce d'émetteur-récepteur optique (801) du module optique, qui est positionnée entre le support avant (233) et le support arrière (232) ; la hauteur de saillie du support central (231) sur la surface supérieure (221) de la plaque transversale (220) est supérieure à chacune des hauteurs de saillie du support avant (233) et du support arrière (232) ;
le support avant (233) est configuré pour supporter une puce de commande (802) du module optique et s'étend le long de la direction allant du support central (231) à la paroi latérale avant (213) du boîtier d'entourage (210) ;
le support arrière (232) est configuré pour supporter une puce de commande (803) du module optique et s'étend le long de la direction allant du support central (231) à la paroi latérale arrière (214) du boîtier d'entourage (210) ;
les hauteurs de saillie du support avant (233) et du support arrière (232) respectent les exigences suivantes : quand les puces de commande (802, 803) sont montées sur le support avant (233) et le support arrière (232), les bornes des puces de commande (802, 803) sont alignées avec les bornes de sortie de deux cartes souples latérales (420, 430) de la PCB s'étendant hors de la surface supérieure (221) de la plaque transversale (220).

4. Structure de conditionnement de module optique de la revendication 1, dans laquelle une pluralité de cylindres verticaux (223) sont disposés sur la surface supérieure (221) de la plaque transversale (220), dans laquelle chacun des cylindres verticaux (223) s'étend vers le haut le long de la direction perpendiculaire à la surface supérieure (221) de la plaque transversale (220), et les cylindres verticaux (223) sont configurés pour être équipés de trous de bouchage (421, 431) ouverts sur les deux cartes souples latérales (420, 430) de la PCB (400) ou ouverts sur l'ensemble lentille (600) dans le module optique, respectivement.

5. Structure de conditionnement de module optique de l'une quelconque des revendications 1 à 4, comportant en outre :
un banc gauche (250), la surface inférieure du banc gauche (250) étant couplée à la surface supérieure (221) de la plaque transversale (220) et la surface gauche du banc gauche (250) étant couplée à la paroi latérale gauche (211) du boîtier d'entourage (210), et la surface supérieure du banc gauche (250) étant fixée au couvercle supérieur (100) après que le couvercle supérieur (100) a été monté sur le boîtier d'entourage (210) ; et
un banc droit (260), la surface inférieure du banc droit (260) étant couplée à la surface supérieure (221) de la plaque transversale (220) et la surface latérale droite du banc droit (260) étant couplée à la paroi latérale droite (212) du boîtier d'entourage (210), et la surface supérieure du banc droit (260) étant fixée au couvercle supérieur (100) après que le couvercle supérieur (100) a été monté sur le boîtier d'entourage (210) ; et
le banc gauche (250), le banc droit (260) et le couvercle supérieur (100) sont constitués de matériaux métalliques.

6. Structure de conditionnement de module optique de la revendication 5, dans lequel la surface supérieure du banc gauche (250) et la surface supérieure du banc droit (260) sont respectivement couplées au couvercle supérieur (100) par un adhésif thermoconducteur.

7. Structure de conditionnement de module optique de l'une quelconque des revendications 1 à 4, dans lequel des ailettes (270) sont disposées sur le côté externe de la paroi latérale gauche (211) et sur le côté externe de la paroi latérale droite (212) du boîtier d'entourage (210), respectivement.

8. Module optique, comprenant la structure de conditionnement de module optique de l'une quelconque des revendications 1 à 7, comprenant en outre:
une PCB (400) comportant une carte rigide de PCB (410) et deux cartes souples latérales (420, 430) s'étendant respectivement vers l'extérieur depuis le côté avant et le côté arrière de la carte rigide de PCB (410), la carte rigide de PCB (410) étant disposée sous la carte transversale (220), et les deux cartes souples latérales (420, 430) passant respectivement à travers les trous de montage en forme de bande (240) de bas en haut et étant ensuite pliées pour se fixer à la surface supérieure (221) de la plaque transversale (220) ;
des puces (800) qui génèrent de la chaleur en fonctionnement disposées sur le support de puce(230) ;
un ensemble lentille (600) monté sur la plaque transversale (220), par lequel les puces (800) sont recouvertes ;
un câble optique (700) configuré pour se connecter à l'ensemble lentille (600) en vue de transmettre un signal optique, qui s'étend hors d'une cavité interne délimitée par le boîtier d'entourage (210) ;
dans lequel la PCB (400), l'ensemble lentille (600) et les puces (800) sont conditionnés dans un boîtier délimité par le couvercle supérieur (100), le boîtier d'entourage (210) et la plaque inférieure (300).

9. Module optique de la revendication 8, dans lequel une zone en retrait (423, 433) est respectivement formée sur chacune des deux cartes souples latérales (420, 430), les zones en retrait (423, 433) sont respectivement disposées sur le côté des deux cartes souples latérales (420, 430) faisant face aux puces (800), et au moins une partie des puces (800) est positionnée dans les zones en retrait (423, 433), les trois côtés latéraux entourant chacune des zones en retrait (423, 433) étant configurés pour être les bornes de sortie de chacune des cartes souples latérales (420, 430) qui sont connectées aux bornes des puces (800) respectives.

10. Module optique de la revendication 9, dans lequel un ou plusieurs composants électroniques (440) faisant saillie depuis la surface supérieure (411) de la carte rigide de PCB (410) sont disposés par-dessus, une ou plusieurs rainures (224) adaptées à la forme du dessus du composant électronique (440) sont disposées sur la surface inférieure (222) de la plaque transversale (220) ; quand la PCB (400) est montée sur la plaque transversale (220), le composant électronique (440) sur la carte rigide de PCB (410) fait saillie à l'intérieur de la rainure (224) et la surface supérieure du composant électronique (440) se fixe à la surface inférieure de la rainure (224).

11. Module optique de la revendication 10, dans lequel les puces (800) sont couplées au support de puce (230) par une pâte thermoconductrice ; dans lequel la surface supérieure (411) de la carte rigide de PCB (410) est collée à la surface inférieure (222) de la plaque transversale (220) par un adhésif thermoconducteur ; la surface inférieure (412) de la carte rigide de PCB (410) est collée à la plaque inférieure (300) ; une rainure (610) est formée sur la surface inférieure de l'ensemble lentille (600) et les puces (800) sont disposées dans la rainure (610), et les parois inférieures de l'ensemble lentille (600) entourant la rainure (610) sont collées aux cartes souples latérales (420, 430) de la PCB (400).

12. Module optique de l'une quelconque des revendications 8 à 11, dans lequel des cylindres de positionnement (225) sont également disposés sur la surface inférieure (222) de la plaque transversale (220) ; les cylindres de positionnement (225) s'étendent vers le bas hors de la surface où se trouve le bas du boîtier d'entourage (210) et passent à travers des trous de positionnement (413) ouverts sur la carte rigide de PCB (410), et s'étendent à travers la cavité (310) sur la plaque inférieure (300).

13. Module optique de la revendication 12, comportant en outre :
un connecteur électrique (500) configuré pour être positionné dans la cavité (310) sur la plaque inférieure (300), des trous débouchants (413) configurés pour être utilisés pour le positionnement étant ouverts sur le connecteur électrique (500), trous par lesquels les cylindres de positionnement (225) passent et sont ajustés avec serrage avec les trous débouchants (413).

14. Module optique de la revendication 13, dans lequel des contacts électriques (520) sont disposés sur la surface inférieure de la carte rigide de PCB (410), et les contacts électriques (520) sur la surface inférieure sont en contact avec les contacts électriques (520) disposés sur la surface supérieure du connecteur électrique (500).
